# EUROPÄISCHE PATENTSCHRIFT

(11) **EP 0 784 005 B1**
(45) Veröffentlichungstag und Bekanntmachung des Hinweises auf die Patenterteilung: **21.06.2000**
(21) Anmeldenummer: 96810880.3
(22) Anmeldetag: 18.12.1996
(51) Int. Cl.: B62D 29/00, B62D 21/11

(54) **Wagenkasten für Kraftfahrzeuge mit Aufnahme für ein Federbein**
Motor vehicle body structure with attachment for a suspension strut
Carosserie pour véhicules à moteur avec fixation pour une jambe de suspension

(30) Priorität: 12.01.1996 DE 29600483 U
(43) Veröffentlichungstag der Anmeldung: 16.07.1997
(73) Patentinhaber: Alusuisse Technology & Management AG, 8212 Neuhausen am Rheinfall (CH)
(72) Erfinder: Wehner, Frank, 78256 Steisslingen (DE); Hein, Jörg, 78256 Steisslingen (DE)

(56) Entgegenhaltungen:
- DE-A- 4 204 825
- US-A- 5 320 403

## Beschreibung

Die Erfindung betrifft einen Wagenkasten für Kraftfahrzeuge mit Tragprofilen und wenigstens einer an diesen vorgesehenen Aufnahme für das obere Ende eines -- gegebenenfalls geneigt angeordneten -- Federbeins, wobei die Aufnahme aus einer Legierung stranggepreßt und mit einem ihren Innenraum nach oben hin überspannenden Firstdeckel versehen ist.

Ein derartiger Wagenkasten ist der DE-OS 42 04 825 zu entnehmen. Als Aufnahme für das Federbein ist dort eine einstückig stranggepreßte, geschlossene Ringmanschette zwischen Hohlprofile als Träger eingesetzt; an die Außenfläche der Ringmanschette sind parallel zu einem ihrer Durchmesser verlaufende Paare von Stegplatten angeformt, an welche die Träger angeschlossen werden. Als Firstdeckel dient hier ein kappenartiges Guß- oder Blechteil mit abgewinkeltem Umfangsrand, welcher der Außenfläche der Ringmanschette haltend anliegt. Nachteile der Ringmanschette sind zum einen deren schwierige Montage, zum anderen das Entstehen von Preßnähten.

In Kenntnis dieses Standes der Technik hat sich der Erfinder das Ziel gesetzt, einen Wagenkasten -- insbesondere für geländegängige Personenkraftwagen -- mit Aufnahme/n der gattungsgemäßen Art unter Meidung der erkannten Mängel in der Herstellung zu vereinfachen und bezüglich seiner Stabilität zu verbessern.

Zur Lösung dieser Aufgabe führt die Lehre des unabhängigen Anspruches; die Unteransprüche geben besonders günstige Weiterbildungen an.

Erfindungsgemäß wird die -- bevorzugt hohlzylindrische -- Aufnahme aus mehreren stranggepreßten Formstücken zusammengesetzt, deren jedes einen querschnittlich gekrümmten Schalenabschnitt sowie zumindest zwei etwa radial vom Schalenabschnitt abragende Laschenstreifen als Anschlußelemente für das jeweils benachbarte Formstück aufweist. Bevorzugter Werkstoff für jene Formstücke ist eine Aluminiumlegierung.

Nach einem weiteren Merkmal der Erfindung besteht das preßbare Formstück aus einem querschnittlich teilkreisförmig gekrümmten Schalenabschnitt und an dessen Querschnittsenden etwa radial zur Mittelachse der Aufnahme anschließenden Laschenstreifen; letztere erlauben ein einfaches Zusammenfügen der Formstücke ohne thermische Beeinflussung.

Zudem hat es sich als günstig erwiesen, aus dem Schalenabschnitt wenigstens eine Formrippe herauszuformen - bevorzugt deren mehrere, die über seinen Querschnitt verteilt sind. Diese Formrippen verlaufen parallel zu den Laschenstreifen und damit zur Mittelachse der Aufnahme. Dabei sollen die Formrippen aus der Innenfläche des Schalenabschnitts und die Laschenstreifen aus dessen Außenfläche herausgeformt sein, also auf den unterschiedlichen Seiten ihres Formstückes liegen.

Als günstig hat es sich erwiesen, zur Erhöhung der Anschlußkräfte zwischen den Formstücken jedem Laschenstreifen eine der Formrippen zu benachbaren, bevorzugt eine Formrippe mit angenähert rechteckigem Querschnitt; die zwischen den beiden randnahen Formrippen des Schalenabschnitts vorgesehene/n weitere/n Formrippe/n kann/können eine gekrümmte freie Querschnittskontur anbieten.

Erfindungsgemäß weisen die Formrippen an ihrer mit einer Endkante des Schalenabschnittes etwa fluchtenden Stirnfläche zumindest ein Aufnahmeloch für ein Verbindungselement -- insbesondere eine Schraube -- auf.

Mit diesem Verbindungselement wird der bereits erwähnte Firstdeckel am Formstück festgelegt, der entsprechende Durchgänge für die Schrauben od. dgl. anbietet - diese bevorzugt in einem Anschlagrand, der auf die Endkanten der Schalenabschnitte der Aufnahme aufgelegt und dann mit den Verbindungselementen an die Formrippen angeschlossen wird. Im übrigen umgibt der Anschlagrand eine Mittelplatte des Firstdeckels oder Pralltopfes, die gegebenenfalls auch aus der vom Anschlagrand bestimmten Ebene schüsselähnlich herausgeformt sein kann; an ihr befindet sich in montiertem Zustand der Kopf des in die Aufnahme ragenden Federbeins.

Die beschriebene Aufnahme ist zudem Teil der Trägerstruktur des Wagenkastens. Hierzu sind an zumindest ein Formstück der Aufnahme etwa tangential eine Anschlußplatte sowie eine dazu parallele Stegplatte angeformt, welche gemeinsam einen Montagespalt für das vordere Querprofil des Fahrzeugrahmens od. dgl. begrenzen. Die Einschubtiefe dieses Montagespaltes kann durch Anschlagrippen der Anschlußplatte und der Stegplatte festgelegt sein.

Es liegt im Rahmen der Erfindung, der Aufnahme ein Gitterprofil als Verbindungsteil zwischen einem vorderen Querprofil und einem seitlichen Längsprofil des erwähnten Rahmens des Wagenkastens zuzuordnen. Dieses Gitterprofil kann an einem kastenartigen Abschnitt mit einer Ankerstelle für einen Querlenker des Kraftfahrzeuges zwei parallele Plattenelemente aufweisen, zwischen denen jenes Längsprofil angeordnet ist. An beide seitlichen Längsprofile mag ein hinteres Querprofil des Rahmens durch jeweils ein --Aufnahmeeinrichtungen für Zusatzteile aufweisendes --Eckstück angeschlossen sein.

Nach einem weiteren Merkmal der Erfindung soll sich über den seitlichen Längsprofilen des Wagenkastens zwischen dem Eckstück und einer der Aufnahme für das Federbein benachbarten Anschlußplatte jeweils ein Versteifungsbügel wölben; die Anschlußplatte übergreift einen Teil des Gitterprofils.

Die beschriebene Konstruktion führt beispielsweise zu den folgenden Vorteilen:
* die Formstücke sind ebenso wie das Gitterprofil Vollprofile, weshalb Preßnahtprobleme nicht entstehen;
* die Schraubkanäle zur Befestigung des Firstdeckels oder Pralltopfes sind in die Konstruktion integriert;
* die Schraubkanäle können auch als Aufnahmen für den Lenkarm benutzt werden;
* das Federbeinprofil enthält Stutzen zur Befestigung von Rahmenteilen durch Schweißen oder Schrauben;
* die Federbeinaufnahme und der Pralltopf werden mechanisch gefügt, Toleranzprobleme können deshalb nicht auftreten.

Weitere Vorteile, Merkmale und Einzelheiten der Erfindung ergeben sich aus der nachfolgenden Beschreibung eines bevorzugten Ausführungsbeispiele sowie anhand der Zeichnung; diese zeigt in
- Fig. 1:: eine Schrägsicht auf eine Trägerstruktur für einen Personenkraftwagen;
- Fig. 2:: ein vergrößertes Teil der Trägerstruktur in Seitenansicht gemäß Pfeil II in Fig. 1;
- Fig. 3:: einen Querschnitt durch einen zweiteiligen Abschnitt der Fig. 1;
- Fig. 4:: die Draufsicht auf einen anderen Teil der Fig. 1;
- Fig. 5:: den Querschnitt durch Fig. 4 nach deren Linie V-V.

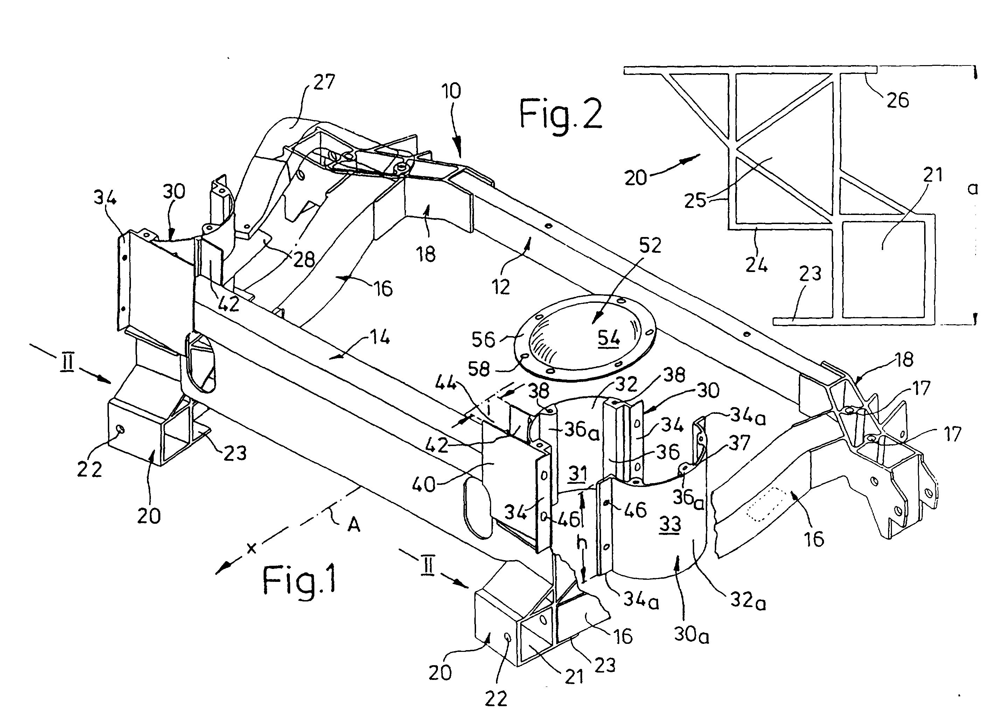

Der in Fig. 1 skizzierte Frontabschnitt einer Trägerstruktur aus der Bodengruppe eines Personenkraftwagens weist einen Rahmen 10 mit einem in Fahrtrichtung x hinteren Querprofil 12, einem vorderen Querprofil 14 und -- parallel zur Wagenlängsachse A als Symmetrieachse verlaufenden -- seitlichen Längsrohren 16 auf. Letztere sind mit dem hinteren Querprofil 12 durch -- mehrere Aufnahmen 17 aufweisende -- Eckstücke 18 verbunden. Andernends schließen die Längsrohre 16 jeweils mittels eines fachwerkähnlichen Gitterprofils 20 an das vordere Querprofil 14 an.

Am Gitterprofil 20 der Querschnittshöhe a von 175 mm ist in einem äußeren Kastenteil 21 ein Ankerpunkt 22 für einen aus Gründen der Übersichtlichkeit nicht dargestellten Querlenker vorgesehen. Von diesem Kastenteil 21 geht eine horizontale Stützzunge 23 als Auflage für jenes Längsrohr 16 aus, das oben von einer parallelen Stützplatte 24 übergriffen wird. An letztere schließt -- in Fig. 2 nach oben hin -- ein Fachwerk- oder Gitterteil 25 mit Obergurt 26 an.

Über dem in Fig. 1 linken Längsrohr 16 wölbt sich ein Versteifungsbügel 27, der zum Zeichnungsvordergrund hin mit einer Anschlußplatte 28 des Rahmens 10 verbunden ist.

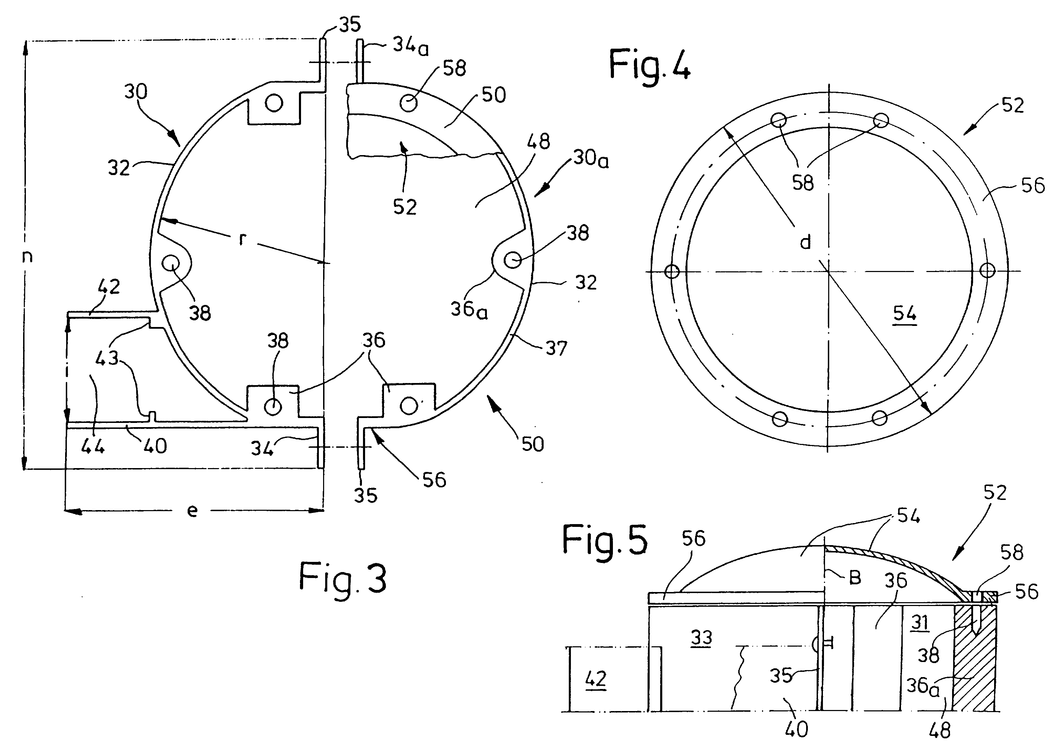

An jedem Ende des vorderen Querprofiles 14 findet sich ein - - aus einer Aluminiumlegierung stranggepreßtes -- Formstück 30 mit einem querschnittlich etwa teilkreisförmigen Schalenabschnitt 32, der an radial angeformten -- sich über seine Höhe h erstreckenden -- Laschenstreifen 34 endet. Wie insbesondere Fig. 3 verdeutlicht, bestimmen die Außenkanten 35 der Laschenstege 34 einen Abstand n von hier 205 mm.

Aus der Innenfläche 31 des Schalenabschnittes 32 sind drei zu den Laschenstreifen 34 parallele Formrippen 36, 36ₐ herausgeformt; zwei den Laschenstreifen 34 nahe Formrippen 36 sind von rechteckigem Querschnitt, die zwischen ihnen -- bevorzugt äquidistant -- verlaufende dritte Formrippe 36ₐ ist mit nahezu dreiecksförmigem Querschnitt wulstartig ausgebildet. Diese Formrippen 36,36ₐ bieten an ihren mit der Endkante 37 des Schalenabschnittes 32 etwa fluchtenden Stirnflächen jeweils ein Schraubloch 38 an.

An die Außenfläche 33 des Schalenabschnittes 32 ist nahe dem in Fig. 1 vorderen Laschenstreifen 34 tangential eine Anschlußplatte 40 der Länge e von 125 mm angeformt sowie in einem Abstand i zu ihr eine parallele Stegplatte 42. In einem von den Platten 40,42 sowie von -- von diesen miteinander fluchtenden abragenden -- Anschlagrippen 43 definierten Montagespalt 44 der Breite i sitzt das vordere Querprofil 14.

Ein weiteres Formstück 30ₐ -- ebenfalls aus einem Schalenabschnitt 32ₐ und zwei Laschenstreifen 34ₐ -- wird an die Laschenstreifen 34 des beschriebenen ersten Formstückes 30 angelegt, wobei in den Laschenstreifen 34, 34ₐ vorgesehene Durchbrüche 46 miteinander fluchten, um nicht dargestellte Verbindungsschrauben, Nieten od.dgl. aufzunehmen.

Als Firstabschluß des Innenraumes 48 eines -- ein in der Zeichnung vernachlässigtes, beispielsweise eine Schraubenfeder enthaltendes Federbein des Personenkraftwagens aufnehmenden -- von den beiden Formstücken 30, 30ₐ gebildeten zylinderartigen Rohrstumpfes 50 wird auf diesen ein tellerähnlicher Firstdeckel oder Pralltopf 52 aufgesetzt; dieser ist insgesamt aus einem Aluminiumblech geformt oder als Schmiedeteil ausgeführt und besteht aus einer -- in Fig. 5 überhöht skizzierten -- gewölbten Mittelplatte 54 sowie einem auf dem Rohrstumpf 50 aufsitzenden ringförmigen Anschlagrand 56.

Ausnehmungen 58 des Anschlagrandes 56 durchgreifende, in die Schraublöcher 38 der Formrippen 36,36ₐ eingesetzte Schrauben legen den Pralltopf 52 des Durchmessers d an dem aus jenen Formstücken 30,30ₐ gebildeten Rohrstumpf 50 des Innenradius r von etwa 80,45 mm fest. Dessen Mittelachse ist in Fig. 5 mit B bezeichnet.

Bei nicht dargestellten Ausführungsbeispielen ist zum einen die Mittelplatte 54 des Firstdeckels oder Pralltopfes 52 eben, also querschnittlich nicht gewölbt. Zum anderen können die Löcher 38 als -- während des Preßvorganges entstehende -- in den Formrippen 36,36ₐ achsparallel durchgehende Kanäle ausgebildet sein und etwa auch zur Befestigung des Lenkarmes herangezogen werden.

## Patentansprüche

1. Wagenkasten für Kraftfahrzeuge mit Tragprofilen (12 bis 16) und wenigstens einer an diesen vorgesehenen Aufnahme (50) für das obere Ende eines Federbeins, wobei die Aufnahme (50) aus einer Legierung stranggepreßt und mit einem ihren Innenraum (48) nach oben hin überspannenden Firstdeckel (52) versehen sowie aus mehreren stranggepreßten Formstücken (30, 30ₐ) zusammengesetzt ist, deren jedes einen querschnittlich gekrümmten Schalenabschnitt (32, 32ₐ) sowie zumindest zwei vom Schalenabschnitt (32, 32ₐ) abragende Laschenstreifen (34, 34ₐ) als Anschlußelemente für das jeweils benachbarte Formstück (30ₐ, 30) aufweist.

2. Wagenkasten nach Anspruch 1, dadurch gekennzeichnet, daß das Formstück (30,30ₐ) aus seinem querschnittlich teilkreisförmig gekrümmten Schalenabschnitt (32,32ₐ) und an dessen Querschnittsenden etwa radial zur Mittelachse (B) der Aufnahme (50) anschließenden Laschenstreifen (34,34ₐ) besteht.

3. Wagenkasten nach Anspruch 1 oder 2, dadurch gekennzeichnet, daß aus dem Schalenabschnitt (32,32ₐ) wenigstens eine Formrippe (36,36ₐ) herausgeformt ist.

4. Wagenkasten nach Anspruch 3, dadurch gekennzeichnet, daß die Formrippe (36,36ₐ) parallel zu den Laschenstreifen (34,34ₐ) verläuft.

5. Wagenkasten nach Anspruch 3 oder 4, dadurch gekennzeichnet, daß die Formrippen (36,36ₐ) aus der Innenfläche (31) des Schalenabschnitts (32,32ₐ) und die Laschenstreifen (34,34ₐ) aus dessen Außenfläche (33) herausgeformt sind.

6. Wagenkasten nach einem der Ansprüche 1 bis 5, dadurch gekennzeichnet, daß jedem Laschenstreifen (34,34ₐ) eine der Formrippen (36) benachbart ist.

7. Wagenkasten nach Anspruch 5 oder 6, dadurch gekennzeichnet, daß die Formrippen (36,36ₐ) am Querschnitt des Schalenabschnittes (32,32ₐ) gleichmäßig verteilt sind.

8. Wagenkasten nach einem der Ansprüche 3 bis 7, dadurch gekennzeichnet, daß die Formrippe (36) von etwa rechteckigem Querschnitt ist.

9. Wagenkasten nach einem der Ansprüche 3 bis 7, dadurch gekennzeichnet, daß die Formrippe (36ₐ) wulstartig mit teilweise gekrümmter Querschnittskontur ausgebildet ist.

10. Wagenkasten nach wenigstens einem der Ansprüche 1 bis 9, dadurch gekennzeichnet, daß die Formrippe (36,36ₐ) zumindest ein an einer mit einer Endkante (37) des Schalenabschnittes (32,32ₐ) etwa fluchtenden Stirnfläche mündendes Aufnahmeloch (38) für ein Verbindungselement, insbesondere eine Schraube, aufweist.

11. Wagenkasten nach wenigstens einem der Ansprüche 1 bis 10, dadurch gekennzeichnet, daß an zumindest ein Formstück (30) der Aufnahme (50) etwa tangential eine Anschlußplatte (40) sowie eine dazu parallele Stegplatte (42) angeformt sind, welche gemeinsam einen Montagespalt (44) für ein Tragprofil (14) begrenzen.

12. Wagenkasten nach Anspruch 11 gekennzeichnet durch die Einschubtiefe des Montagespaltes (44) bestimmende Anschlagrippen (43) der Anschlußplatte (40) und der Stegplatte (42).

13. Wagenkasten nach wenigstens einem der Ansprüche 1 bis 12, dadurch gekennzeichnet, daß der Firstdeckel (52) einen Anschlagrand (56) zur Auflage auf die Endkanten (34) der Schalenabschnitte (32,32a) aufweist und der Anschlagrand mit den Verbindungselementen an die Formrippen (36,36ₐ) anschließbar ausgebildet ist.

14. Wagenkasten nach Anspruch 1 oder 13, dadurch gekennzeichnet, daß der Firstdeckel (52) eine vom Anschlagrand (56) umgebene Mittelplatte (54) aufweist.

15. Wagenkasten nach Anspruch 14, dadurch gekennzeichnet, daß die Mittelplatte (54) schüsselartig ausgebildet und aus der Ebene des Anschlagrandes (56) herausgeformt ist.

16. Wagenkasten nach wenigstens einem der Ansprüche 1 bis 15, dadurch gekennzeichnet, daß der Aufnahme (50) ein Gitterprofil (20) als Verbindungsteil zwischen einem vorderen Querprofil (14) und einem seitlichen Längsprofil (16) eines Rahmens (10) des Wagenkastens zugeordnet ist.

17. Wagenkasten nach Anspruch 16, dadurch gekennzeichnet, daß das Gitterprofil (20) an einem kastenartigen Abschnitt (21) mit einer Ankerstelle (22) für einen Querlenker des Kraftfahrzeuges zwei parallele Plattenelemente (23,24) aufweist, zwischen denen das Längsprofil (16) angeordnet ist.

18. Wagenkasten nach Anspruch 16 oder 17, dadurch gekennzeichnet, daß an seine seitlichen Längsprofile (16) ein hinteres Querprofil (12) durch jeweils ein Aufnahmeeinrichtungen (17) aufweisendes Eckstück (18) angeschlossen ist.

19. Wagenkasten nach wenigstens einem der Ansprüche 1 bis 18, dadurch gekennzeichnet, daß sich über seinen seitlichen Längsprofilen (16) zwischen dem Eckstück (18) und einer der Aufnahme (50) benachbarten Anschlußplatte (28) jeweils ein Versteifungsbügel (27) wölbt.

20. Wagenkasten nach Anspruch 17 oder 19, dadurch gekennzeichnet, daß die Anschlußplatte (28) einen Teil (26) des Gitterprofils (20) übergreift.

## Claims

1. Vehicle frame for powered vehicles with load bearing sections (12 to 16) and on these at least one housing (50) for the upper end of a shock absorber, said housing being (50) made of an extruded alloy and provided with a cover (52) the interior of which is dished upwards, and comprising a plurality of extruded shaped parts (30, 30ₐ), each of which features a shell-like section (32, 32ₐ) which is curved in cross-section and, projecting from the shell sections (32, 32ₐ), at least two flange strips (34, 34ₐ) which serve as means for attachment to the neighbouring shaped part (30ₐ, 30).

2. Vehicle frame according to claim 1, characterised in that the shaped part (30, 30ₐ) comprises a shell section (32, 32ₐ) which in cross-section is part of a circle and at the ends features - as viewed in cross-section - flange strips (34, 34ₐ) running approximately radial to the central axis (B) of the housing (50).

3. Vehicle frame according to claim 1 or 2, characterised in that a there is at least one integral rib (36, 36ₐ) on the shell section (32, 32ₐ).

4. Vehicle frame according to claim 3, characterised in that the integral rib (36, 36ₐ) runs parallel to the flange strips (34, 34ₐ).

5. Vehicle frame according to claim 3 or 4, characterised in that the integral, ribs (36, 36ₐ) are formed on the inner face (31) of the shell section (32, 32ₐ) and the flange strips (34, 34ₐ) are formed on the outer face (33).

6. Vehicle frame according to one of the claims 1 to 5, characterised in that each flange strip (34, 34ₐ) has an integral rib (36) neighbouring on to it.

7. Vehicle frame according to claim 5 or 6, characterised in that the integral ribs (36, 36ₐ) are uniformly distributed along the cross-section of the shell section (32, 32ₐ).

8. Vehicle frame according to one of the claims 3 to 7, characterised in that the integral rib (36) is approximately rectangular in cross-section.

9. Vehicle frame according to one of the claims 3 to 7, characterised in that the integral rib (36ₐ) is bulge-shaped with a partially curved cross-sectional contour.

10. Vehicle frame according to one of the claims 1 to 9, characterised in that the integral rib (36, 36ₐ) exhibits for a connecting element, in particular a screw, at least one hole which is approximately flush with an end edge (37) of the shell section (32, 32ₐ).

11. Vehicle frame according to one of the claims 1 to 10, characterised in that on at least one shaped part (30) of the housing (50), and approximately tangential to it, an integral connecting plate (40) and a plate (42) are provided and jointly delimit a gap (44) for mounting the housing onto a load bearing section (14).

12. Vehicle frame according to claim 11, characterised by way of stops (43) which determine the depth of the installation space (44), by the adjacent plate (40) and plate (42).

13. Vehicle frame according to at least one of the claims 1 to 12, characterised in that the cover (52) exhibits a rim (56) for contact with the end edge (34) of the shell sections (32, 32ₐ) and the rim (56) is such that it can be connected to the integral ribs (36, 36ₐ).

14. Vehicle frame according to claim 1 or 13, characterised in that the cover (52) exhibits a central plate (54) surrounded by a rim (56).

15. Vehicle frame according to claim 14, characterised in that the central plate (54) is dish-shaped and is domed out of the plane defined by the rim (56).

16. Vehicle frame according to at least one of the claims 1 to 15, characterised in that a grid-like section (20) mounted on the housing (50) serves as a connecting member between a front transverse section (14) and a longitudinal section (16) of the vehicle frame (10).

17. Vehicle frame according to claim 16, characterised in that the grid-like section (20) exhibits two parallel plate-shaped elements (23, 24) on a box-shaped section (21) with an anchoring site (22) for a vehicle lateral or transverse control arm, and the longitudinal section (16) is mounted between these elements (23, 24).

18. Vehicle frame according to claim 16 or 17, characterised in that a rear transverse section (12) of the frame is connected to the longitudinal sections (16) by corner pieces (18) each featuring connection housings (17).

19. Vehicle frame according to at least one of the claims 1 to 18, characterised in that a curved stiffening arm (27) is provided over the longitudinal side sections (16) and is joined to the corner piece (18) and a connecting plate (28) neighbouring the housing (50)

20. Vehicle frame according to claim 17 or 19, characterised in that the connecting plate (28) spans a part of the grid-like section (20).

## Revendications

1. Carrosserie pour véhicules à moteur, comportant des profilés porteurs (12 à 16), et au moins un logement (50), prévu sur ces profilés, pour l'extrémité supérieure d'une jambe de suspension, ledit logement (50) étant extrudé à partir d'un alliage, doté d'un couvercle de sommet (52) qui coiffe sa chambre intérieure (48) vers le haut, et composé de plusieurs pièces conformées extrudées (30, 30a), chacune desdites pièces comportant un tronçon en coque incurvé dans le sens transversal (32, 32a), ainsi qu'au moins deux rubans en forme de patte (34, 34a) dépassant depuis le tronçon en coque (32, 32a) à titre d'éléments de raccordement pour la pièce conformée voisine respective (30a, 30).

2. Carrosserie pour selon la revendication 1, caractérisée en ce que la pièce conformée (30, 30a) est constituée par son tronçon en coque (32, 32a) incurvé sous forme de partie de cercle en coupe transversale, et par des rubans en forme de patte (34, 34a) qui se raccordent approximativement radialement par rapport à l'axe médian (B) du logement (50).

3. Carrosserie selon l'une ou l'autre des revendications 1 et 2, caractérisée en ce qu'il est réalisé au moins une nervure en forme (36, 36a) par formage à partir du tronçon en coque (32, 32a).

4. Carrosserie selon la revendication 3, caractérisée en ce que la nervure en forme (36, 36a) s'étend parallèlement aux rubans en forme de patte (34, 34a).

5. Carrosserie selon l'une ou l'autre des revendications 3 et 4, caractérisée en ce que les nervures en forme (36, 36a) sont formées depuis la surface intérieure (31) du tronçon en coque (32, 32a), et en ce que les rubans en forme de patte (34, 34a) sont formés depuis sa surface extérieure (33).

6. Carrosserie selon l'une des revendications 1 à 5, caractérisée en ce que l'une des nervures en forme (36) est voisine de chaque ruban en forme de patte (34, 34a).

7. Carrosserie selon l'une ou l'autre des revendications 5 et 6, caractérisée en ce que les nervures en forme (36, 36a) sont réparties régulièrement sur la section transversale du tronçon en coque (32, 32a).

8. Carrosserie selon l'une des revendications 3 à 7, caractérisée en ce que la nervure en forme (36) a une section approximativement rectangulaire.

9. Carrosserie selon l'une des revendications 3 à 7, caractérisée en ce que la nervure en forme (36a) est réalisée à la manière d'un bourrelet avec un contour de section transversale partiellement incurvé.

10. Carrosserie selon l'une au moins des revendications 1 à 9, caractérisée en ce que la nervure en forme (36, 36a) comporte au moins un trou de réception (38), qui débouche au niveau d'une surface frontale approximativement en affleurement avec une arête terminale (37) du tronçon en coque (32, 32a), pour un élément de liaison, en particulier une vis.

11. Carrosserie et selon l'une au moins des revendications 1 à 10, caractérisée en ce que sur au moins une pièce en forme (30) du logement (50) sont formées une plaque raccordement (40) ainsi qu'une plaque d'âme (42) parallèle à celle-ci, approximativement tangentiellement, lesdites plaques délimitant conjointement une fente de montage (44) pour un profilé porteur (14).

12. Carrosserie selon la revendication 11, caractérisée en ce qu'elle comprend des nervures de butée (43), sur la plaque de raccordement (40) et sur la plaque d'âme (42), qui déterminent la profondeur d'introduction de la fente de montage (44).

13. Carrosserie selon l'une au moins des revendications 1 à 12, caractérisée en ce que le couvercle de sommet (52) comporte une bordure de butée (56) afin de reposer sur les arêtes terminales (34) des tronçons en coque (32, 32a), et en ce que la bordure de butée est réalisée de façon à pouvoir se raccorder aux éléments de jonction sur les nervures en forme (36, 36a).

14. Carrosserie selon l'une ou l'autre des revendications 1 et 13, caractérisée en ce que le couvercle de sommet (52) comprend une plaque médiane (54) entourée par la bordure de butée (56).

15. Carrosserie selon la revendication 14, caractérisée en ce que la plaque médiane (54) est réalisée à la manière d'une cuvette, et formée à partir du plan de la bordure de butée (56).

16. Carrosserie selon l'une au moins des revendications 1 à 15, caractérisée en ce qu'il est prévu un profilé grillagé (20), associé au logement (50), à titre de partie de liaison entre un profilé transversal avant (14), et un profilé longitudinal latéral (16) d'un cadre (10) de la carrosserie.

17. Carrosserie selon la revendication 16, caractérisée en ce que le profilé grillagé (20) comporte, au niveau d'un tronçon (21) en forme de boîte doté d'un emplacement d'ancrage (22) pour un bras de suspension transversal du véhicule, deux éléments parallèles en forme de plaque (23, 24), entre lesquels est agencé le profilé longitudinal (16).

18. Carrosserie selon l'une ou l'autre des revendications 16 et 17, caractérisée en ce qu'il est prévu un profilé transversal postérieur (12), raccordé sur ses profilés longitudinaux latéraux (16) à l'aide d'une pièce de coin respective (18) présentant des moyens de réception (17).

19. Carrosserie selon l'une au moins des revendications 1 à 18, caractérisée en ce qu'il est prévu un arceau de renfort respectif (27) bombé au-dessus de ses profilés longitudinaux latéraux (16) entre la pièce de coin (18) et une plaque de raccordement (28) voisine du logement (50).

20. Carrosserie selon l'une ou l'autre des revendications 17 et 19, caractérisée en ce que la plaque de raccordement (28) coiffe une partie (26) du profilé grillagé (20).
